# FASCICULE DE BREVET EUROPEEN

(11) **EP 1 183 516 B1**
(45) Date de publication et mention de la délivrance du brevet: **09.02.2005**
(21) Numéro de dépôt: 00938895.0
(22) Date de dépôt: 07.06.2000
(51) Int. Cl.: G01N 5/02, G01G 3/12, G01N 33/487, B01L 3/00

(54) **PLATE-FORME D'ANALYSE CHIMIQUE OU BIOLOGIQUE A MICROBALANCES, DISPOSITIF ET PROCEDE D'ANALYSE UTILISANT LA PLATE-FORME**
PLATFORM FÜR CHEMISCHE UND BIOLOGISCHE ANALYSE MIT MIKROWAAGE, ANALYSEGERÄT UND VERFAHREN ZUR VERWENDUNG DERSELBEN
PLATFORM FOR CHEMICAL OR BIOLOGICAL ANALYSIS WITH MICROBALANCES, ANALYSIS DEVICE AND METHOD USING SAME

(30) Priorité: 08.06.1999 FR 9907201
(43) Date de publication de la demande: 06.03.2002
(73) Titulaire: COMMISSARIAT A L'ENERGIE ATOMIQUE, 75752 Paris Cédex 15 (FR)
(72) Inventeur: PELTIE, Philippe, F-38760 Saint Paul de Varces (FR); CAILLAT, Patrice, F-38130 Echirolles (FR)
(74) Mandataire: Weber, Etienne Nicolas
(86) Numéro de dépôt international: PCT/FR2000/001556
(87) Numéro de publication internationale: WO 2000/075626

(56) Documents cités:
- EP-A- 0 072 744
- EP-A- 0 511 662
- WO-A-94/18697
- WO-A-98/50773
- US-A- 5 719 324

## Description

### Domaine technique

La présente invention concerne une plate-forme d'analyse chimique ou biologique.

De telles plates-formes sont généralement désignées par puces de détection ou biopuces, selon le domaine d'application.

Elle comportent une pluralité de sites, par exemple sous la forme de microcuvettes. Sur les sites sont placés des réactifs, identiques ou différents pour chaque site, qui sont susceptibles de réagir sélectivement avec une ou plusieurs composants d'un milieu à analyser ou analyte.

Dans le présent exposé, les termes réactif et réaction sont compris dans un sens très large englobant à la fois les réactions chimiques au sens usuel du terme et les phénomènes de complexation, ou d'hybridation qui concernent plus spécifiquement le matériel biologique, tel que par exemple les brins d'ADN.

L'invention concerne également un procédé et un dispositif d'analyse permettant la lecture des sites de la plate-forme d'analyse.

La lecture peut être la simple détermination pour chaque site, si une réaction a eu lieu ou non. Elle peut aussi comporter une quantification des réactions qui ont eu lieu.

L'invention trouve des applications dans les domaines de l'analyse chimique ou biologique, et en particulier pour le séquençage de l'ADN.

### Etat de la technique antérieure

Un exemple particulier d'analyse qu'il est possible d'effectuer au moyen de plates-formes d'analyse est, comme indiqué ci-dessus le séquençage de l'ADN.

Les plates-formes d'analyse, ou biopuces, comportent un grand nombre de sites sur lesquels sont initialement greffés des brins d'ADN appelés sondes. Une sonde différente est greffée sur chaque site et constitue le "réactif".

Lorsqu'une telle plate-forme est mise en contact avec un milieu à analyser contenant également des brins d'ADN, une hybridation peut avoir lieu entre les brins présents dans le milieu et les sondes qui leur sont appariés. Une hybridation sélective a donc lieu.

Après cette opération, l'examen des sites permet de déterminer ceux qui ont réagi, c'est-à-dire ceux dont les sondes ont fait l'objet d'une hybridation et de connaître ainsi la composition du milieu analysé ou tout au moins certains constituants du milieu analysé.

On connaît différentes techniques permettant d'identifier les sites qui ont réagi.

Une première technique consiste à détecter la fluorescence d'un marqueur accroché à l'échantillon d'ADN à analyser.

Une autre technique consiste à détecter des charges électriques portées par le squelette phosphaté des molécules d'ADN au moyen d'un transistor à effet de champ.

Ces techniques sont intéressantes mais nécessitent une préparation des molécules pour leur conférer la propriété électrique ou émissive qui sert à leur reconnaissance.

On connaît également une technique dans laquelle les sondes d'ADN sont fixées sur une plaque de quartz que l'on fait vibrer.

Lorsque la sonde fait l'objet d'une hybridation, sa masse augmente et la fréquence de résonance de la plaque de quartz diminue. Ce phénomène est utilisé pour détecter l'hybridation.

Toutefois, pour obtenir un bon résultat, la surface de la plaque de quartz doit être de l'ordre de quelques millimètres carrés. Or, une telle surface n'est pas compatible avec les impératifs d'une intégration d'un nombre toujours plus grand de sites.

L'augmentation du nombre de sites sur les puces s'accompagne généralement d'une réduction de leur taille, de façon à limiter la surface totale de la puce.

On connaît encore une autre technique permettant de lire les sites sans faire appel à des marqueurs. Cette technique fait appel à un microscope à force atomique (AFM) pour "cartographier la surface" de la puce. L'extrême précision de cet appareil permet de détecter directement l'hybridation. Le principe de l'AFM repose sur la déformation d'une micropoutre que l'on approche de la surface de la puce, la déformation provoquée par des interactions entre une pointe à l'extrémité de la poutre et la surface balayée est mesurée simplement par un faisceau laser réfléchi par cette poutre.

Avec un bras de levier de 10 cm, une déformation de l'ordre du nanomètre infléchit le faisceau laser de plusieurs microns, ce qui peut facilement être mis en évidence par un réseau de photodétecteurs.

La microscopie par force atomique souffre cependant d'un certain nombre de limitations. En effet, sa mise en oeuvre doit avoir lieu de préférence en salle blanche et il faut un temps non négligeable pour analyser un site d'une biopuce. Il n'est donc pas concevable d'utiliser un microscope AFM pour mesurer des centaines de sites en parallèle. Enfin, son coût est rédhibitoire actuellement pour en faire un simple lecteur de puces.

Une description plus détaillée des microscopes AFM et des techniques associées peut être trouvée dans les documents (1), (2), (3), (4), (5), (6), (7) dont les références sont précisées à la fin de la présente description.

Il est également connu par le document WO-A-9850773 d'utiliser une plate-forme d'analyse biologique comportant un support fixe et un support mobile garni de réactif, ledit support mobile étant constitué par une poutre flexible.

### Exposé de l'invention

La présente invention a pour but de proposer une plate-forme d'analyse ainsi qu'un dispositif de lecture ne présentant pas les limitations évoquées ci-dessus.

En particulier, un but est de proposer une plate-forme d'analyse et une méthode d'analyse permettant de détecter les réactions ou hybridations qui ont lieu sans faire appel à des marqueurs fluorescents et sans préparation préalable des produits à analyser.

Un autre but est de permettre la quantification des réactions qui ont eu lieu.

Un but est encore de proposer une plate-forme d'analyse avec des sites miniaturisés et pouvant comporter un nombre important de tels sites.

L'invention a également pour but de proposer une méthode d'analyse pouvant être mise en oeuvre sans avoir recours à une salle blanche, et qui ne perturbe pas le site analysé.

Enfin, un but de l'invention est de proposer une plate-forme et un dispositif de lecture simples, fiables et économiques.

Pour atteindre ces buts, l'invention a plus précisément pour objet une plate-forme selon la revendication 1.

Chaque support mobile ou au moins une partie de ces supports peuvent constituer un site d'analyse tel qu'évoqué précédemment, en étant garni avec un réactif chimique ou biologique. Les supports mobiles d'une même plate-forme peuvent comporter des réactifs différents ou identiques.

Lors d'une réaction chimique ou biologique, par exemple lors d'une hybridation d'un brin d'ADN avec une sonde d'ADN, le poids supporté par le support mobile concerné est modifié.

En particulier, ce poids est augmenté lors d'une hybridation.

Le poids peut aussi augmenter ou diminuer en raison d'une modification des poids moléculaires du réactif, lorsque celui-ci réagit chimiquement.

Comme le support mobile est maintenu par des moyens flexibles, c'est-à-dire présentant une certaine raideur, la modification du poids supporté par le support mobile se traduit par un infléchissement plus ou moins important de ces moyens.

Les moyens de maintien flexibles comportent au moins une poutre flexible présentant une première extrémité solidaire du support mobile et une deuxième extrémité solidaire du support fixe. On peut noter que, dans une réalisation simplifiée, le support mobile peut être formé par une portion de la poutre flexible, de préférence au voisinage de l'extrémité mobile de la poutre.

La poutre est une poutre repliée, par exemple en spirale. Le fait de replier la poutre en spirale permet d'augmenter sa longueur et donc la sensibilité du dispositif.

Plus précisément, l'invention permet une mesure de l'amplitude du déplacement du support mobile grâce à l'utilisation de moyens de maintien présentant une géométrie assurant une grande sensibilité définie par le rapport entre le poids et l'amplitude du déplacement. Plus la poutre présente un rapport longueur/section important, plus sa sensibilité est grande. Aussi, pour avoir une plate-forme présentant un ou plusieurs sites d'analyses sur une surface réduite, l'invention propose d'utiliser des poutres repliées dans une forme de spirale carrée ou circulaire, par exemple.

L'extrémité fixe de la poutre correspond par exemple à l'extrémité extérieure de la spirale, tandis que l'extrémité centrale, libre, porte le support mobile.

Dans une réalisation perfectionnée de la plate-forme, celle-ci peut comporter au moins un second support mobile associé au premier support mobile, le deuxième support mobile étant relié audit support fixe par des seconds moyens de maintien flexibles, également sous la forme d'une poutre repliée. Le deuxième support mobile est de préférence garni d'un élément de même masse que le réactif qui se trouve sur le premier support mobile, mais qui ne réagit pas avec l'analyte à tester. Il s'agit par exemple du même réactif que celui garnissant le premier support, mais neutralisé. Par ailleurs, les premier et second moyens de maintien, avec les supports mobiles associés, peuvent avantageusement présenter la même raideur.

De préférence, les premier et deuxième supports mobiles peuvent être adjacents. Le deuxième support mobile n'est pas utilisé comme site d'analyse, mais sert de référence pour effectuer des mesures différentielles. Ces mesures sont alors davantage affranchies des conditions de mesure et conduisent à une meilleure sensibilité.

Bien que non indispensable, l'utilisation de support mobiles doubles est particulièrement appropriée lorsqu'on souhaite quantifier une réaction qui a eu lieu, en mesurant de combien le poids du réactif s'est modifié.

Ceci permet par exemple de connaître la longueur et/ou le nombre de brins d'ADN hybridés.

Dans une analyse plus sommaire, de type tout ou rien, une précision de mesure moindre avec un dispositif simplifié peut être préférée.

Dans une réalisation particulière, la plate-forme peut comporter une première poutre flexible pour le maintien du premier support mobile, et une deuxième poutre flexible pour le maintien du second support mobile, les première et deuxième poutres présentant des tronçons parallèles juxtaposés.

Grâce aux tronçons parallèles juxtaposés les poutres flexibles de chaque paire de supports mobiles sont sensiblement soumises aux mêmes conditions extérieures de mesure et un gain important en terme d'encombrement peut être obtenu.

Comme cela ressortira plus clairement de la suite de la description, la mesure de la déflexion, c'est-à-dire du déplacement des supports mobiles peut faire appel à la réflexion d'un faisceau laser.

A cet effet, le support mobile ou une partie solidaire du support mobile peut comporter une surface réfléchissante pour un faisceau laser.

L'invention concerne également un dispositif de lecture d'une plate-forme d'analyse telle que décrite. Le dispositif comprend une source de lumière apte à produire un faisceau de lumière de lecture, des moyens pour diriger le faisceau vers au moins un support mobile, et des moyens de réception d'un faisceau réfléchi provenant du support mobile, et de détection de déplacements dudit faisceau réfléchi.

Les moyens de réception du faisceau réfléchi et de détection de ses déplacements peuvent comporter une pluralité de photodétecteurs. Lorsque les photodétecteurs sont balayés par le faisceau réfléchi, l'amplitude de déplacement du faisceau est déterminé, par exemple, en fonction du nombre de photodétecteurs balayés.

Comme l'amplitude de déplacement du faisceau est liée au déplacement du support mobile ou à l'infléchissement des moyens flexibles de maintien du support mobile, il est possible de calculer cette valeur.

La valeur correspondant au déplacement du support mobile est une valeur de sortie du dispositif qui peut être affichée ou également enregistrée en vue d'un traitement de données ultérieur.

Le dispositif peut encore comporter des moyens de déplacement relatif du faisceau de lecture et de la plate-forme pour balayer avec le faisceau une pluralité de supports mobiles de la plate-forme.

Ces moyens permettent d'explorer successivement une pluralité de sites, c'est-à-dire une pluralité de supports mobiles. Ils comportent par exemple un plateau tournant ou une table de translation pour déplacer la plate-forme d'analyse devant une source de lumière de lecture.

La source de lumière de lecture et les moyens de réception du faisceau réfléchi peuvent également être conçus pour pouvoir se déplacer.

Enfin, une pluralité de sources de lumière de lecture associées à une pluralité de moyens de réception de faisceaux réfléchis peuvent être prévus en vue d'une lecture simultanée d'une pluralité de sites.

L'invention concerne encore un procédé d'analyse biologique ou chimique utilisant une plate-forme d'analyse et éventuellement un dispositif de lecture tels que décrits.

Selon ce procédé :
- on équipe au moins un support mobile d'un réactif dont le poids est susceptible d'être modifié lors d'une réaction chimique ou biologique,
- on met en contact le support avec un milieu à analyser susceptible de contenir des espèces pouvant réagir avec ledit réactif de façon à modifier son poids,
- on détecte un éventuel déplacement du support mobile par l'intermédiaire d'un faisceau de lumière dirigé vers et réfléchi depuis le support mobile.

La détection du déplacement du support mobile peut être soit une simple détection de type tout ou rien, c'est-à-dire une détection dont l'objet est de déterminer si le support mobile s'est déplacé ou non.

La détection peut aussi avoir pour objet de mesurer l'amplitude du déplacement du support mobile, ce qui permet de calculer, en connaissant la raideur des moyens flexibles de maintien du support mobile, la modification du poids de la structure mobile.

La détection, c'est-à-dire la mesure de l'amplitude de déplacement du support mobile, peut, comme évoqué précédemment, être une mesure absolue ou une mesure relative par rapport à un deuxième support mobile, sensiblement identique, mais neutre.

Enfin, l'invention a pour objet un procédé de fabrication d'une plate-forme d'analyse telle que décrite. Selon ce procédé :
- on forme un masque de gravure sur un substrat ayant une couche sacrificielle disposée entre une couche mince superficielle et une couche de base, le masque de gravure présentant un motif qui définit l'emplacement et les dimensions du support mobile et des moyens de maintien flexible,
- on met en forme par gravure la couche mince superficielle selon le motif du masque,
- on élimine sélectivement la couche sacrificielle pour libérer le support mobile et les moyens de maintien associés.

Les gravures mises en oeuvre d'une part pour la mise en forme de la couche mince superficielle et d'autre part pour l'élimination locale de la couche sacrificielle sont de préférence des gravures sélectives permettant d'attaquer préférentiellement le matériau de la couche mince superficielle ou celui de la couche sacrificielle enterrée.

Le substrat utilisé est, par exemple, un substrat du type silicium sur isolant (SOI) dans lequel la couche de base et la couche mince superficielle sont en silicium et dans lequel la couche enterrée est en oxyde de silicium.

D'autres caractéristiques et avantages de la présente invention ressortiront mieux de la description qui va suivre, en référence aux figures des dessins annexés. Cette description est donnée à titre purement illustratif et non limitatif.

### Brève description des figures

- La figure 1 es,t une représentation schématique et simplifiée d'une partie d'une plate-forme d'analyse et d'un dispositif de lecture, conformes à l'invention.
- La figure 2 est un schéma également simplifié illustrant le principe de lecture de la plate-forme.
- La figure 3 est un graphique indiquant une amplitude de déflexion de supports mobiles de différentes plates-formes en fonction d'une variation du poids supporté par des supports mobiles de ces plates-formes.
- Les figures 4 à 8 sont des coupes schématiques d'un substrat, illustrant des étapes successives de la fabrication d'une plate-forme d'analyse conforme à l'invention.

### Description détaillée de modes de mise en oeuvre de l'invention

La description qui suit se rapporte plus particulièrement à un site d'analyse particulier d'une plate-forme. il convient cependant de garder à l'esprit qu'une même plate-forme peut comporter un grand nombre de tels sites.

A titre d'exemple, une même plate-forme peut comporter jusqu'à 1000 sites d'analyse.

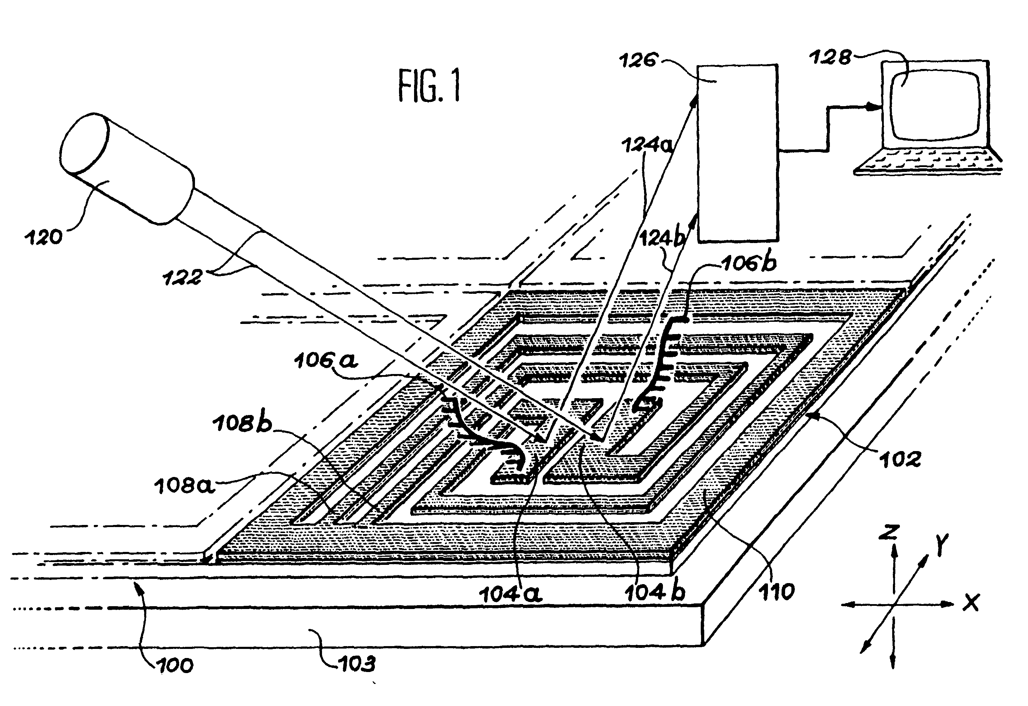

Sur la figure 1, la référence 102 désigne un site particulier d'une plate-forme 100 équipée d'une pluralité de sites.

Chaque site comprend, deux supports mobiles 104a, 104b associés.

Le premier support mobile 104a est équipé d'un ou plusieurs brins d'ADN 106a greffés à sa surface et susceptibles de s'hybrider sélectivement avec des brins appariés se trouvant dans une solution ou un milieu à analyser.

Le deuxième support mobile 104b, associé au premier, est disposé en son voisinage et est équipé de brins d'ADN identiques 106b mais neutralisés, c'est-à-dire inhybridables, ou d'une molécule de même poids. Il peut également être dépourvu de réactif. Les deux supports mobiles, bien que voisins sont indépendants l'un de l'autre. Le deuxième support mobile sert de "référence" puisque porteur d'une sonde neutralisée. La lecture après hybridation est une lecture différentielle entre la déflexion de la poutre 108a portant le premier support mobile et celle d'une poutre 108b portant le deuxième support mobile.

Chaque support mobile est relié à un support fixe 110 par l'intermédiaire respectivement d'une poutre flexible 108a, 108b. Le support fixe 110 est par exemple un cadre rigide de la plate-forme s'étendant entre les sites ou à la périphérie des sites 100.

On observe sur la figure que les supports mobiles 104a, 104b sont simplement formés par les extrémités libres des poutres flexibles 108a, 108b. A cet effet, les extrémités libres des poutres sont élargies.

Les poutres flexibles ,sont repliées selon un motif en spirale carrée. Elles présentent une extrémité fixe solidaire du support fixe 110 et une extrémité mobile solidaire respectivement du support mobile associé ou formant directement le support mobile.

Sur l'exemple de la figure, les poutres flexibles 108a, 108b de chaque site s'étendent de façon concentrique de manière à présenter des segments rectilignes parallèles et adjacents.

La longueur des segments extérieurs, les plus longs est par exemple de l'ordre de 100 à 150 µm, ce qui correspond sensiblement à la dimension du côté d'un site 102.

Les poutres qui ne sont maintenues que par leur extrémité fixe sont susceptibles de s'infléchir en réponse à une modification du poids supporté par les supports mobiles correspondants.

L'inflexion, et donc le déplacement des supports a lieu préférentiellement selon une direction Z, indiquée sur la figure, qui est perpendiculaire au plan principal de la plate-forme.

Une sensibilité maximale de mesure est obtenue lorsque la direction Z est sensiblement confondue avec le champ de gravitation terrestre, ce qui a lieu naturellement en disposant la plate-forme sur un plan de travail horizontal.

L'amplitude de la déflexion en réponse à une modification de poids donnée dépend d'un grand nombre de paramètres. Parmi ceux-ci, on peut citer la longueur et la forme des poutres 108a, 108b, leur épaisseur, leur largeur et le matériau utilisé. Ces paramètres peuvent être ajustés pour obtenir une constante de raideur souhaitée.

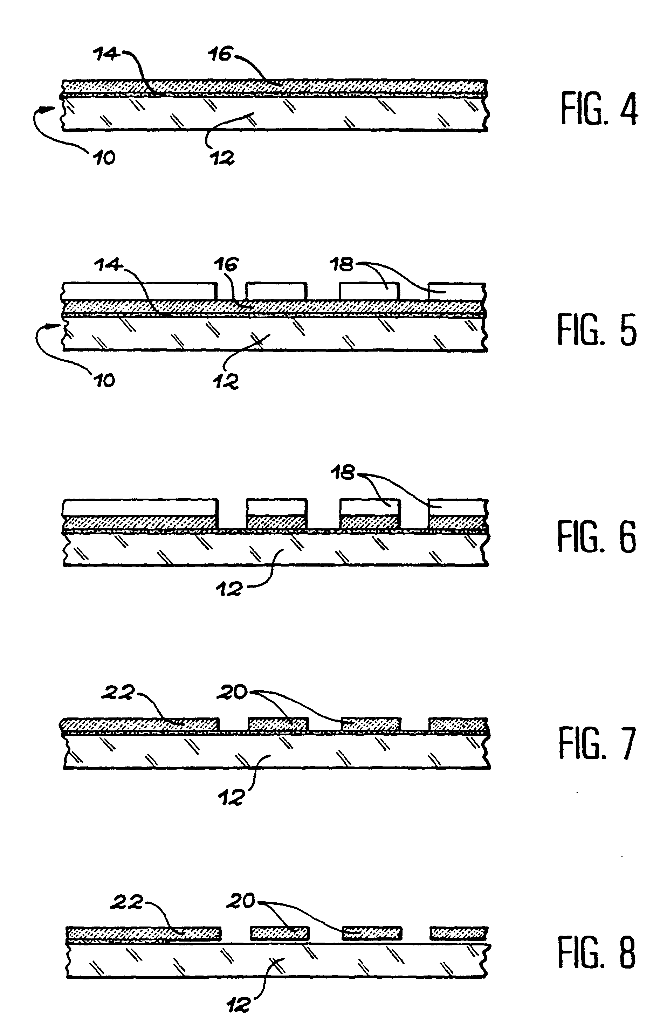

Des exemples de choix possibles pour les paramètres sont indiqués dans la suite de la description, en relation avec la figure 4.

Il convient de préciser que différentes formes de poutre flexible peuvent être envisagées. De plus, d'autres réalisations des moyens flexibles de maintien du support mobile peuvent être conçus.

La référence 120 désigne une source de lumière de lecture. Il s'agit par exemple d'un laser émettant un ou plusieurs faisceaux parallèles 122.

Le faisceau laser est dirigé vers les supports mobiles ou il se réfléchit. La réflexion peut avoir lieu sur les supports mobiles, sur une extrémité des poutres flexibles ou éventuellement sur des surfaces réfléchissantes solidaires des supports mobiles.

Le ou les faisceaux réfléchis 124a, 124b sont dirigés vers un ensemble de détecteurs photoélectriques 126 capables de détecter un déplacement des faisceaux et éventuellement de mesurer l'amplitude des déplacements.

Les photodétecteurs sont reliés à des moyens d'enregistrement et d'exploitation, par exemple sous la forme d'un ordinateur 128.

Dans l'exemple de la figure, deux faisceaux 124a et 124b sont réfléchis à partir des deux supports mobiles 104a et 104b.

La réception des deux faisceaux sur les détecteurs photoélectriques permet soit d'effectuer deux mesures indépendantes, soit d'effectuer une mesure différentielle.

Dans l'exemple illustré, la plate-forme 100 est disposée sur une table de translation 103 permettant de déplacer la plate-forme 100 selon deux directions X et Y, perpendiculaires à la direction Z déjà mentionnée.

Le déplacement de la plate-forme permet de balayer plusieurs sites avec la même source de lumière, pour des mesures successives.

La source de lumière 120 et les détecteurs photoélectriques 126 peuvent également être conçus pour pouvoir être déplacés, si nécessaire.

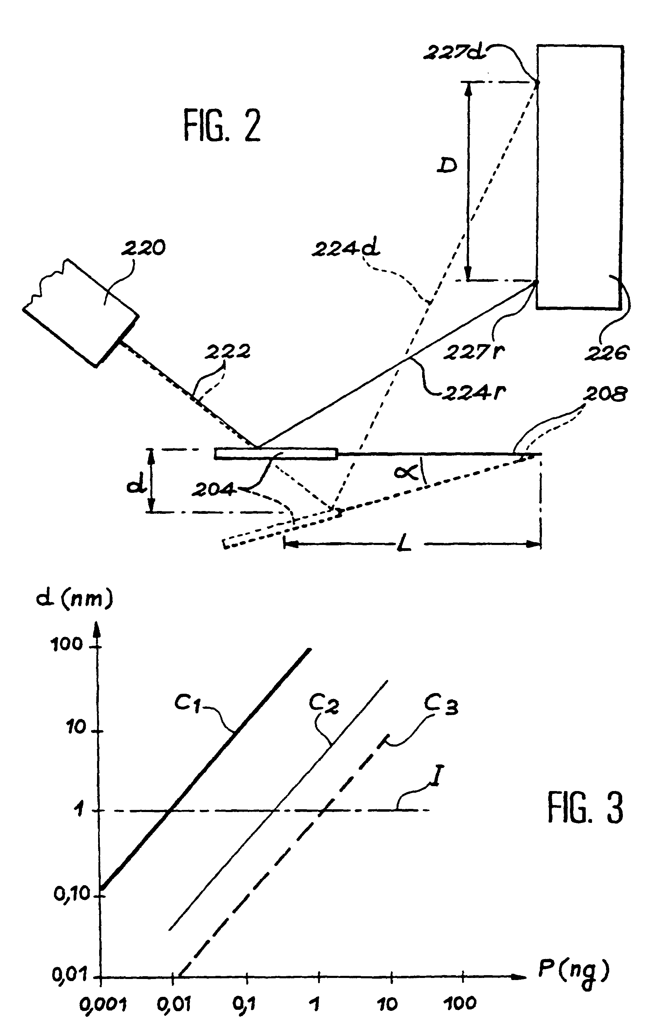

La figure 2 montre schématiquement comment la déflexion des moyens de maintien flexibles se traduit par un déplacement du faisceau réfléchi.

Sur la figure 2, des éléments identiques ou similaires à ceux de la figure 1 portent les mêmes références auxquelles on a ajouté 100.

La figure 2 montre un support mobile 204, maintenu par une poutre flexible 208, de longueur L, la longueur L étant mesurée d'un point fixe jusqu'au centre de gravité du support mobile. (Pour des raisons de simplification, la poutre de la figure 2 est une poutre droite). Le support est représenté en trait plein dans sa position de repos et dans une position dans laquelle la poutre est infléchie. Cette deuxième position appelée "position infléchie" est représentée en trait discontinu.

Dans la position de repos du support mobile 204, un faisceau laser 222, provenant d'une source 220, se réfléchit en formant un rayon réfléchi 224r.

Le rayon réfléchi 224r, dans la position de repos, vient en incidence sur un ensemble de détecteurs 226 en une première position 227r.

Dans la position infléchie du support mobile 204, un rayon réfléchi 224d vient en incidence sur les détecteurs en une deuxième position 227d, décalée par rapport à la première.

Pour une longueur de poutre L donnée, un angle de déflexion α se traduit par un déplacement D du faisceau réfléchi entre les première et deuxième positions 227r, 227d sur les détecteurs 226.

Sur la figure, on a également représenté la déflexion d, entre les deux positions du support mobile 204.

Dans l'exemple de la figure, avec une poutre 240 d'une longueur de 100 nm, avec un support mobile dont la demi-longueur ℓ est de 40 µm, une déflexion d de 1 nm se traduit par un déplacement D du faisceau de 2,5 µm sur les détecteurs.

La figure 3 est un graphique logarithmique qui indique en ordonnée la déflexion d'une poutre à son extrémité, en fonction de la variation du poids que supporte le support mobile.

La déflexion, qui correspond à la déflexion d sur la figure 2 est indiquée en ordonnée et exprimée en nanomètres.

La variation du poids (masse) est reportée en abscisse et exprimée en nanogrammes.

Les courbes C₁, C₂ et C₃ du graphique sont établies avec un dispositif conforme à la figure 1, où le tronçon rectiligne extérieur le plus long de la poutre repliée en spirale est de 150 µm, et où les tronçons sont respectivement espacés de 5 µm.

Pour la courbe C₁, la largeur de la poutre est de 5 µm et son épaisseur de 1 µm.

Pour la courbe C₂, la largeur de la poutre est de 5 µm et son épaisseur de 3 µm.

Pour la courbe C₃, la largeur de la poutre est de 5 µm et son épaisseur de 5 µm.

On observe une linéarité entre la variation du poids et la déflexion. Les courbes (droites) C₁, C₂, C₃ présentent une pente qui caractérise la raideur des moyens flexibles de maintien (poutre). Le graphique permet, en connaissant la courbe (droite) de raideur, de déterminer la variation du poids en fonction de l'amplitude de la déflexion enregistrée.

La raideur des moyens flexibles est de préférence ajustée pour que, en fonction d'une gamme de variations de poids envisagée, la partie de la courbe caractéristique correspondante se situe majoritairement au-dessus d'une ligne notée I. La ligne I correspond à des déflexions dont l'amplitude est supérieure ou égale à 1 nm. Ces déflexions sont plus aisément détectables.

Les figures 4 à 8, décrites ci-après, indiquent les étapes d'un procédé de fabrication d'une plate-forme selon l'invention.

Pour des raisons de simplification, seules une partie d'une plate-forme comprenant un seul site d'analyse est représentée.

La figure 4 montre un substrat initial 10 comprenant une couche de base épaisse 12, servant de support, une couche sacrificielle intermédiaire 14 et une couche mince superficielle 16.

Le substrat est par exemple un substrat de type SOI (Silicon On Insulator, silicium sur isolant) dans lequel la couche de base et la couche superficielle sont en silicium et dans lequel la couche intermédiaire est en oxyde de silicium.

La couche superficielle 16 est utilisée pour fabriquer une poutre flexible qui se termine par un support mobile tel que décrit précédemment.

Pour ajuster la raideur de la poutre, il est possible de modifier l'épaisseur de la couche mince superficielle 16.

A cet effet, une épitaxie de silicium sur la couche superficielle 16 permet d'ajuster avec précision son épaisseur.

La figure 5 montre la formation d'un masque 18 sur la couche superficielle 16. Le masque présente un motif qui correspond à la forme et à l'emplacement de la poutre flexible et des supports mobiles que l'on souhaite réaliser.

Le masque est lui-même mis en forme par insolation et développement selon des techniques usuelles de micro-électronique.

Une première gravure sélective du silicium a alors lieu pour éliminer la partie de la couche mince de silicium non protégée par le masque. On obtient ainsi la structure de la figure 6.

La première gravure est par exemple du type gravure sèche en "Reactive Ion Etching" (gravure par ions réactifs), par exemple, en SF₆ ou BCl₃.

Cette gravure est sélective par rapport à l'oxyde de silicium, de sorte qu'elle est arrêtée par la couche sacrificielle enterrée 14. La couche de base 12 est par conséquent protégée.

La figure 7 montre la structure obtenue après l'élimination du masque 18. On distingue sur cette figure deux tronçons 20 de la poutre flexible vue en coupe, ainsi qu'une partie de support fixe 22.

Une deuxième gravure sélective, par voie chimique (FH), de la couche d'oxyde de silicium sacrificielle permet d'éliminer cette couche sous les parties mobiles, c'est-à-dire en particulier sous les tronçons 20 de la poutre flexible.

On observe sur la figure 8 que la deuxième gravure élimine également une partie de la couche sacrificielle correspondant au support fixe, c'est-à-dire en particulier en l'extrémité fixe de la poutre. Toutefois, dans ces régions, la couche sacrificielle n'est pas complètement éliminée de sorte que le support fixe 22 et en particulier l'extrémité fixe de la poutre restent fermement solidaires de la couche de base 12.

### DOCUMENTS CITES

***(1)***
   "High sensitivity micromachined biosensor"
   D.R. Baselt- Proc. Of IEEE, vol. 85, n° 4, avril 97.
***(2)***
   "Analysis and design of an interdigital cantilever as a displacement sensor"
   G.G. Yaralioglu - Journ. Of appl. Ph., vol. 83, n° 12, 15 juin 1998
***(3)***
   "Indépendant detection of vertical and lateral forces with a sidewall-implanted dual-axis piezoresistive cantilever"
   B.W. Chiu - Appl. Ph. Letters, vol. 72, n° 11, 16 mars 1998
***(4)***
   "Microfabrication of new sensors for scanning probe microscopy"
   W. Noël, - Journ. Micromech., 8, 1998.
***(5)***
   "High resolution analysis of biological samples by scanning probe microscopy"
   W.B. Stine, Europ. Micro. and Anal., nov. 1995.
***(6)***
   "Microstructured polymer tips for scanning near-field optical microscopy"
   H. Stürmer, Ultramicroscopy 71, 1998
***(7)***
   "Balance approach for mechanical properties test of micro fabricated structure"
   X. Xiong, SPIE, Vol. 3223.

## Revendications

1. Plate-forme d'analyse biologique ou chimique (10, 102) comportant au moins un support fixe (12, 22, 110) et au moins un premier support mobile (104a, 204) susceptible d'être garni de réactif, le support mobile étant relié au support fixe par des premiers moyens de maintien flexibles (20, 108a, 208) susceptibles d'être infléchis en réponse à une modification d'un poids supporté par le premier support mobile, les moyens de maintien flexibles comportant au moins une poutre flexible repliée présentant une première extrémité solidaire du support mobile et une deuxième extrémité solidaire du support fixe.

2. Plate-forme selon la revendication 1, dans laquelle le premier support mobile (104a) est garni d'un réactif chimique ou d'un réactif biologique.

3. Plate-forme selon la revendication 2, comprenant au moins un deuxième support mobile (104b) associé au premier support mobile (104a), le deuxième support mobile étant relié audit support fixe (110) par des seconds moyens de maintien flexibles (108b) et étant garni d'un matériau non réactif de façon à présenter une masse égale à celle du premier support, garni de réactif.

4. Plate-forme selon la revendication 1, dans laquelle une partie de la poutre au voisinage de la première extrémité de la poutre forme le support mobile.

5. Plate-forme selon la revendication 3, comprenant une première poutre flexible (108a) de maintien du premier support (104a) mobile et une deuxième poutre flexible (108b) de maintien du second support mobile (104b), les première et deuxième poutres présentant des tronçons parallèles juxtaposés.

6. Plate-forme selon la revendication 5, dans laquelle le premier et deuxième supports sont sensiblement identiques et dans laquelle les première et deuxième poutres présentent des coefficients de raideur sensiblement les mêmes.

7. Plate-forme selon la revendication 1, dans laquelle la poutre présente une forme en spirale et le support mobile est ménagé sensiblement au centre de la spirale.

8. Plate-forme selon la revendication 1, dans laquelle le support mobile ou au moins une partie solidaire du support mobile présente une surface réfléchissante pour un faisceau laser.

9. Plate-forme selon la revendication 1, comprenant une pluralité de supports mobiles, reliés au support fixe.

10. Dispositif de lecture d'une plate-forme selon la revendication 1, comprenant une plate-forme selon la revendication 1, au moins une source de lumière (120, 220) apte à produire un faisceau de lumière de lecture, des moyens (126, 226) pour diriger le faisceau vers au moins un support mobile, et des moyens de réception d'un faisceau réfléchi provenant du support mobile, et de détection de déplacements dudit faisceau réfléchi.

11. Dispositif selon la revendication 10, dans lequel les moyens (126, 226) de réception du faisceau réfléchi et de détection de déplacements comportent une pluralité de photodétecteurs.

12. Dispositif selon la revendication 10, dans lequel les moyens pour diriger le faisceau vers au moins un support mobile comportent des moyens (103) de déplacement relatif du faisceau et de la plate-forme pour balayer avec le faisceau une pluralité de supports mobiles de la plate-forme.

13. Procédé d'analyse biologique ou chimique au moyen d'une plate-forme conforme à la revendication 1, dans lequel :
- on équipe au moins un support mobile d'un réactif dont le poids est susceptible d'être modifié lors d'une réaction chimique ou biologique,
- on met en contact le support avec un milieu à analyser susceptible de contenir des espèces pouvant réagir avec ledit réactif de façon à modifier son poids,
- on détecte un éventuel déplacement du support mobile par l'intermédiaire d'un faisceau de lumière dirigé vers et réfléchi depuis le support mobile.

14. Procédé de fabrication d'une plate-forme d'analyse selon la revendication 1, dans lequel :
- on forme un masque de gravure (18) sur un substrat (10) avec une couche sacrificielle (14) disposée entre une couche mince superficielle (16) et une couche de base (12), le masque de gravure présentant un motif qui définit l'emplacement et les dimensions du support mobile et des moyens de maintien flexible,
- on met en forme par gravure la couche mince superficielle selon le motif du masque,
- on élimine sélectivement la couche sacrificielle pour libérer le support mobile et les moyens de maintien associés.

15. Procédé selon la revendication 14, dans lequel le substrat est du type silicium sur isolant (SOI) dans lequel la couche de base et la couche mince superficielle sont en silicium et dans lequel la couche enterrée est en oxyde de silicium.

## Claims

1. Biological or chemical analysis platform (10, 102) comprising at least one fixed support (12, 22, 110) and at least one first mobile support (104a, 204) that may be coated with reagent, the mobile support being connected to the fixed support by first flexible support means (20, 108a, 208) that may be deflected in response to a change in weight supported by the first mobile support, the flexible support means comprising at least one folded flexible beam with at least one end fixed to the mobile support and a second end fixed to the fixed support.

2. Platform according to claim 1, in which the first mobile support (104a) is coated with a chemical reagent or a biological reagent.

3. Platform according to claim 2, comprising at least one second mobile support (104b) associated with the first mobile support (104a), the second mobile support being connected to the said fixed support (110) by second flexible support means (108b) and being coated with a non-reactive material so as to have a mass equal to the mass of the first support coated with reagent.

4. Platform according to claim 1, in which part of the structural beam close to its first end forms the mobile support.

5. Platform according to claim 3, comprising a first flexible support beam (108a) for the first mobile support (104a) and a second flexible support beam (108b) for the second mobile support (104b), the first and second beams having adjacent parallel segments.

6. Platform according to claim 5, in which the first and second supports are approximately identical and in which the first and second beams have approximately the same stiffness coefficients.

7. Platform according to claim 1, in which the beam has a spiral shape and the mobile support is formed approximately at the centre of the spiral.

8. Platform according to claim 1, in which the mobile support or at least a fixed part to the mobile support has a reflecting surface for a laser beam.

9. Platform according to claim 1, comprising several mobile supports connected to the fixed support.

10. Device for reading a platform according to claim 1, comprising a platform according to claim 1 with at least one light source (120, 220) capable of producing a read light beam, means (126, 226) of directing the beam towards at least one mobile support, and means of reception of a reflected beam from the mobile support, and detection of displacements of the said reflected beam.

11. Device according to claim 10, in which the means (126, 226) of reception of the reflected beam and the means of detecting displacements are provided with several photodetectors.

12. Device according to claim 10, in which means of directing the beam towards at least one mobile support comprise means (103) for relatively displacing the beam and the platform to scan several mobile supports on the platform with the beam.

13. Biological or chemical analysis process using one platform conform with claim 1, in which:
- at least one mobile support is coated with a reagent, the weight of which may be modified as a result of a chemical or biological reaction,
- the support is put into contact with a medium to be analysed that could contain compounds that could react with the said reagent in order to modify its weight,
- any displacement of the mobile support is detected by means of a light beam directed towards and reflected away from the mobile support.

14. Process for manufacturing an analysis platform according to claim 1, in which:
- an etching mask (18) is formed on a substrate (10) with a sacrificial layer (14) arranged between a thin surface layer (16) and a base layer (12), the etching mask having a pattern that defines the location and dimensions of the mobile support and the flexible support means,
- the thin surface layer is shaped by etching according to the pattern of the mask,
- the sacrificial layer is selectively eliminated to release the mobile support and the associated support means.

15. Process according to claim 14, in which the substrate is of the silicon on insulator (SOI) type in which the base layer and the thin surface layer are made of silicon and in which the buried layer is made of silicon oxide.

## Patentansprüche

1. Vorrichtung für biologische oder chemische Analyse (10, 102) mit wenigstens einer festen Auflage (12, 22, 110) und wenigstens einer ersten beweglichen Auflage (104a, 204), die mit dem Reagenz belegt werden kann, wobei die bewegliche Auflage mit der festen Auflage durch erste flexible Trageinrichtungen (20, 108a, 208) verbunden ist, die sich als Reaktion auf eine Veränderung eines durch die erste bewegliche Auflage getragenen Gewichts durchbiegen können, und die flexiblen Trageinrichtungen wenigstens einen umgebogenen flexiblen Träger umfassen, der ein erstes Ende aufweist, das mit der beweglichen Auflage verbunden ist, und ein zweites Ende aufweist, das mit der festen Auflage verbunden ist.

2. Vorrichtung nach Anspruch 1, bei der die erste bewegliche Auflage (104a) mit einem chemischen Reagenz oder einem biologischen Reagenz belegt wird.

3. Vorrichtung nach Anspruch 2, mit wenigstens einer mit der ersten beweglichen Auflage (104a) verbundenen zweiten beweglichen Auflage (104b), wobei die zweite bewegliche Auflage mit der festen Auflage (110) durch zweite flexible Trageinrichtungen (108b) verbunden ist und mit einem nichtreaktiven Material belegt wird, so dass ihre Masse gleich der Masse der ersten, mit Reagenz belegten Auflage ist.

4. Vorrichtung nach Anspruch 1, bei der ein Teil des Trägers in der Nähe des ersten Endes des Trägers die bewegliche Auflage bildet.

5. Vorrichtung nach Anspruch 3 mit einem ersten die erste Auflage (104a) tragenden flexiblen Träger (108a) und einem die zweite bewegliche Aufnahme (104b) tragenden flexiblen Träger (108b), wobei der erste und der zweite Träger parallele nebeneinanderliegende Teilabschnitte aufweisen.

6. Vorrichtung nach Anspruch 5, bei der die erste und die zweite Auflage im Wesentlichen gleich sind, und bei der der erste und der zweite Träger im Wesentlichen gleiche Steifheitskoeffizienten aufweisen.

7. Vorrichtung nach Anspruch 1, bei welcher der Träger spiralförmig ist und die bewegliche Auflage sich im Wesentlichen in der Mitte der Spirale befindet.

8. Vorrichtung nach Anspruch 1, bei der die bewegliche Auflage oder wenigstens ein Teil der beweglichen Auflage eine einen Laserstrahl reflektierende Oberfläche aufweist.

9. Vorrichtung nach Anspruch 1 mit einer Vielzahl mit der festen Auflage verbundener beweglicher Auflagen.

10. System zum Lesen einer Vorrichtung nach Anspruch 1, umfassend eine Vorrichtung nach Anspruch 1, wenigstens eine Lichtquelle (120, 220) zur Erzeugung eines Leselichtstrahls, Einrichtungen (126, 226), fähig den Strahl auf wenigstens eine bewegliche Auflage zu richten, und Einrichtungen zum Empfangen eines von der beweglichen Aufnahme stammenden reflektierten Strahls und zum Detektieren der Verschiebung des genannten reflektierten Strahls.

11. System nach Anspruch 10, bei der die Einrichtungen (126, 226) zum Empfangen des reflektierten Strahls und zum Detektieren der Verschiebungen eine Vielzahl Photodetektoren umfassen.

12. System nach Anspruch 10, bei der die Einrichtungen, die dazu dienen, den Strahl auf wenigstens eine bewegliche Auflage zu richten, Einrichtungen (103) zur Relatiwerschiebung des Strahls und der Vorrichtung umfassen, um mit dem Strahl eine Vielzahl beweglicher Auflagen der Vorrichtung abzutasten.

13. Verfahren zur biologischen oder chemischen Analyse mit Hilfe einer Vorrichtung nach Anspruch 1, in dem:
- man wenigstens eine bewegliche Auflage mit einem Reagenz versieht, dessen Gewicht sich bei einer chemischen oder biologischen Reaktion verändern könnte,
- man die Auflage mit einem zu analysierenden Medium in Kontakt bringt, das eventuell Substanzen enthält, die mit dem genannten Reagenz reagieren könnten, so dass sich sein Gewicht verändert,
- man eine eventuelle Verschiebung der beweglichen Auflage durch einen auf die bewegliche Auflage gerichteten und von dieser reflektierten Lichtstrahl detektiert.

14. Verfahren zur Herstellung einer Analysevorrichtung nach Anspruch 1, in dem:
- man auf einem Substrat (10) mit einer Opferschicht (14), vorgesehen zwischen einer dünnen Oberflächenschicht (16) und einer Basisschicht (12), eine Ätzmaske (18) ausbildet, wobei diese Ätzmaske ein Muster aufweist, das die Stelle und die Abmessungen der beweglichen Auflage und der flexiblen Trageinrichtungen definiert,
- man durch Ätzen die dünne Oberflächenschicht gemäß dem Muster der Maske ausbildet,
- man die Opferschicht selektiv eliminiert, um die bewegliche Auflage und die mit ihr verbundenen Trageinrichtungen frei zu machen.

15. Verfahren nach Anspruch 14, bei dem das Substrat vom Typ Silicium-auf-Isolator (SOI) ist; bei dem die Basisschicht und die dünne Oberflächenschicht aus Silicium sind, und bei dem die vergrabene Schicht aus Siliciumoxid ist.
